# EUROPEAN PATENT APPLICATION

(11) **EP 4 817 821 A1**
(43) Date of publication of application: **07.10.2026**
(21) Application number: 24897147.5
(22) Date of filing: 22.10.2024
(51) Int. Cl.: B25J 17/02

(54) **COMPLIANCE UNIT**

(30) Priority: 01.12.2023 JP 2023203973
(71) Applicant: SMC Corporation, Tokyo 104-0031 (JP)
(72) Inventor: SATO, Motohiro, Kashiwa-shi, Chiba 277-0871 (JP)
(74) Representative: Keil & Schaafhausen Patentanwälte PartGmbB
(86) International application number: PCT/JP2024/037479
(87) International publication number: WO 2025/115457

(57) **Abstract**

A compliance unit (10) comprises: a base member (12); a table support part (14); a compliance mechanism (16); and a table unit (18). The base member is provided with a second fluid pressure cylinder (112) that, by pressing a second pressing part (114) toward the table unit in a state in which the table support part is returned to an origin position with respect to the base member by a first fluid pressure cylinder (94), causes the table unit to return from an inclined posture in which a table plate (82) of the table unit is inclined with respect to the XY plane to an origin posture in which the table plate is along the XY plane.

## Description

### TECHNICAL FIELD

The present disclosure relates to a compliance unit.

### BACKGROUND ART

For example, in JP 2002-172582 A, a compliance unit equipped with a base member, a table support member, a compliance mechanism, and a table unit is disclosed. The table support member is capable of moving in an X direction and a Y direction with respect to the base member. The compliance mechanism is interposed between the base member and the table support member so as to be capable of moving in the X direction and the Y direction with respect to the base member and the table support member. The table unit is provided so as to be tiltable with respect to the table support member.

### SUMMARY OF THE INVENTION

There is a long-awaited need to provide a more satisfactory compliance unit.

The present invention has the object of solving the aforementioned problem.

An aspect of the present disclosure is characterized by a compliance unit, comprising: a base member; a table support member disposed so as to be movable with respect to the base member along an XY plane, wherein a direction perpendicular to an X direction is a Y direction; a compliance mechanism interposed between the base member and the table support member so as to be movable in the X direction and the Y direction with respect to the base member and the table support member; and a table unit provided on the table support member so as to be tiltable about an imaginary line extending along the X direction or the Y direction, wherein the base member includes: a first fluid pressure cylinder configured to return the table support member to an origin position with respect to the base member by pressing a first pressing member toward the table support member; and a second fluid pressure cylinder configured to return the table unit from an inclined posture in which a table plate of the table unit is inclined with respect to the XY plane to an origin posture in which the table plate lies along the XY plane, by pressing a second pressing member toward the table unit in a state in which the table support member has been returned to the origin position with respect to the base member by the first fluid pressure cylinder.

According to the present invention, a more satisfactory compliance unit can be provided.

The above objects, features, and advantages will be easily understood from the following description of embodiments, which will be described with reference to the accompanying drawings.

### BRIEF DESCRIPTION OF DRAWINGS

[FIG. 1] FIG. 1 is perspective view of a compliance unit;
[FIG. 2] FIG. 2 is an exploded perspective view of the compliance unit;
[FIG. 3] FIG. 3 is an exploded perspective view of the compliance unit;
[FIG. 4] FIG. 4 is a longitudinal cross-sectional view of the compliance unit;
[FIG. 5] FIG. 5 is a cross-sectional view taken along line V-V of FIG. 4;
[FIG. 6] FIG. 6 is an explanatory diagram of operations of the compliance unit;
[FIG. 7] FIG. 7 is an explanatory diagram of operations of the compliance unit; and
[FIG. 8] FIG. 8 is an explanatory diagram of operations of the compliance unit.

### DETAILED DESCRIPTION OF THE INVENTION

In the compliance unit, the base member may be provided with a first fluid pressure cylinder and a second fluid pressure cylinder. The first fluid pressure cylinder returns the table support member to an origin position with respect to the base member by pressing a first pressing member toward the table support member. The second fluid pressure cylinder can return the table unit from an inclined posture to an origin posture by pressing a second pressing member toward the table unit.

In such a compliance unit, the table unit is provided on the table support member. Therefore, when the second pressing member is pressed against the table unit by the second fluid pressure cylinder in a state in which the table support member shifts from the origin position with respect to the base member, there is a possibility that the table support member cannot be returned to the origin position with respect to the base member. The present disclosure has the object of reliably returning the table support member to the origin position with respect to the base member.

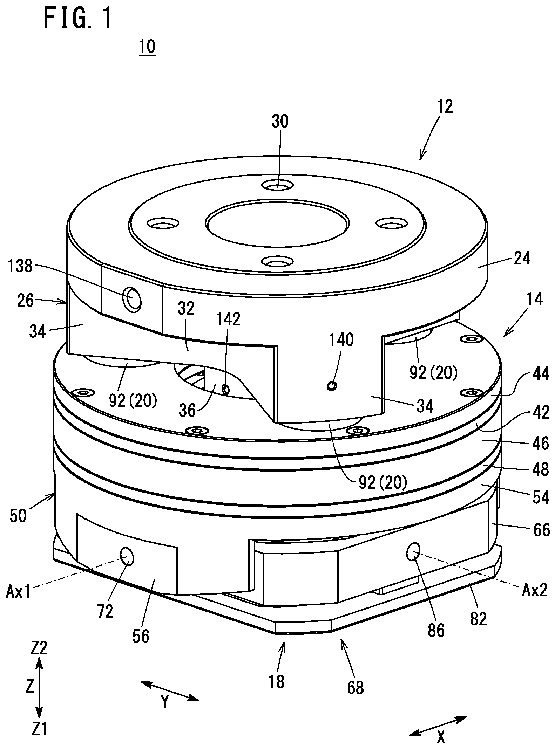

A description will be given concerning a compliance unit 10 according to an embodiment of the present invention with reference to the drawings. The compliance unit 10, for example, is a device for correcting positional misalignment (misalignment) at a time during assembly of a workpiece. Specifically, as shown in FIG. 1, in the compliance unit 10, for example, a non-illustrated robot hand is connected to a base member 12, and a non-illustrated chuck member for gripping the workpiece is mounted on a table unit 18.

The table unit 18 is capable of moving along an XY plane with respect to the base member 12. Further, the table unit 18 is capable of being tilted about a first axial line Ax1 lying along the X direction with respect to a table support member 14. Further, the table unit 18 is capable of being tilted about a second axial line Ax2 lying along the Y direction with respect to the table support member 14.

For example, in a case where misalignment occurs during assembly of the workpiece in which the workpiece is inserted into a predetermined hole, the compliance unit 10 can easily correct the misalignment. Moreover, the application of the compliance unit 10 is not limited to the example of inserting the workpiece into a hole. Hereinafter, a description will be given in detail concerning the configuration of the compliance unit 10.

As shown in FIGS. 1 to 4, the compliance unit 10 includes the base member 12, the table support member 14, a pair of compliance mechanisms 16, the table unit 18, a first origin returning mechanism 20, and a second origin returning mechanism 22.

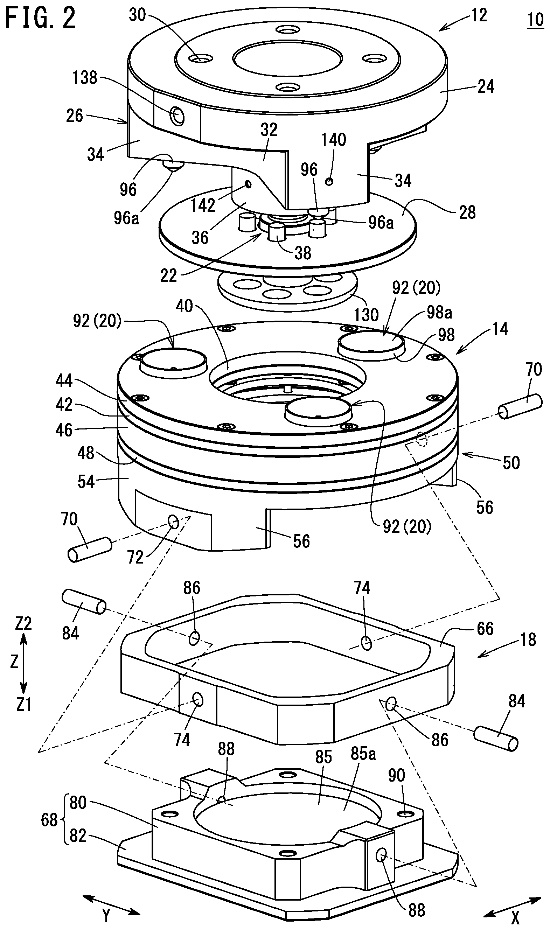

The base member 12 includes a first base portion 24, a second base portion 26, and a support plate 28. The first base portion 24 is a plate shaped member that extends in the X direction and the Y direction. The first base portion 24 is formed in a circular shape when viewed from the Z direction. Mounting holes 30 for mounting the first base portion 24 on a non-illustrated robot hand are formed in the first base portion 24 (see FIG. 1 and FIG. 2). The shape, the size, and the like of the first base portion 24 can be set as appropriate.

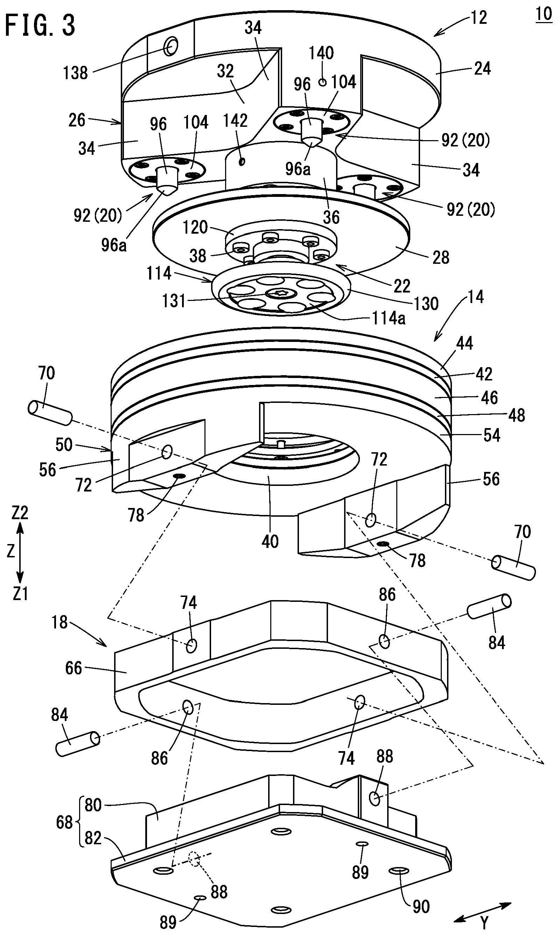

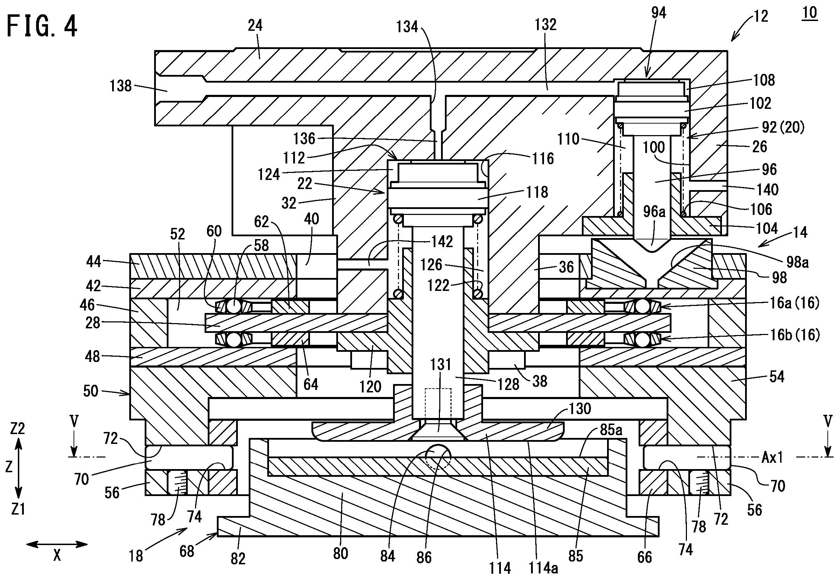

As shown in FIG. 3 and FIG. 4, the second base portion 26 protrudes in the Z1 direction from a surface of the first base portion 24 that faces in the Z1 direction. The second base portion 26 includes a base central part 32, three lateral protrusions 34, and a central protrusion 36. The base central part 32 is connected to a central part of the first base portion 24. The three lateral protrusions 34 protrude radially outward from the base central part 32. The three lateral protrusions 34 are arranged at equal angular intervals in the circumferential direction of the base central part 32. The second base portion 26 may include one, two, four, or more lateral protrusions 34. The central protrusion 36 protrudes in the Z1 direction from the base central part 32. The central protrusion 36 has a circular outer circumferential surface.

The support plate 28 is formed in a circular annular shape. The support plate 28 is mounted on a protruding end surface of the central protrusion 36 by a plurality of fastening members 38 together with a second cover member 120 forming the second origin returning mechanism 22. In other words, the support plate 28 is retained between the central protrusion 36 and the second cover member 120 in the Z direction. The fastening members 38, for example, are screw members.

As shown in FIG. 2 to FIG. 4, the table support member 14 is formed in a circular annular shape. More specifically, a through hole 40 is formed in a central part of the table support member 14. The central protrusion 36 of the base member 12 is inserted into the through hole 40 (see FIG. 4). The inner diameter (hole diameter) of the through hole 40 is larger than the outer diameter of the central protrusion 36.

The table support member 14 includes a first plate 42, a holding member 44, an intermediate member 46, a second plate 48, and a support main body 50. The first plate 42, the intermediate member 46, the second plate 48, and the support main body 50 are stacked in this order in the Z1 direction. The first plate 42 is a flat plate extending along the XY plane. A plurality of receiving members 98 that constitute the first origin returning mechanism 20 are disposed on a surface of the first plate 42 that faces in the Z2 direction (refer to FIG. 2 and FIG. 4). The holding member 44 is disposed on the surface of the first plate 42 that faces in the Z2 direction. The holding member 44 fixes the plurality of receiving members 98 to the first plate 42.

The intermediate member 46 is disposed on a surface of the first plate 42 that faces in the Z1 direction. The thickness dimension of the intermediate member 46 along the Z direction is greater than the thickness dimension of the first plate 42 along the Z direction. The inner diameter of the intermediate member 46 is larger than the inner diameter of the first plate 42.

The second plate 48 is a flat plate extending along the XY plane. The second plate 48 is disposed on a surface of the intermediate member 46 that faces in the Z1 direction. The inner diameter of the second plate 48 is the same as the inner diameter of the first plate 42. More specifically, a space 52 in which the support plate 28 is disposed is formed between the first plate 42 and the second plate 48.

As shown in FIG. 3 and FIG. 4, the support main body 50 includes a connecting plate portion 54 and a pair of connecting convex portions 56. The connecting plate portion 54 is disposed on a surface of the second plate 48 that faces in the Z1 direction. The pair of connecting convex portions 56 protrude in the Z1 direction from an outer circumferential part of a surface of the connecting plate portion 54 that faces in the Z1 direction. The pair of connecting convex portions 56 are arranged alongside one another with a gap therebetween in the X direction. The pair of connecting convex portions 56 support the table unit 18.

As shown in FIG. 4, the pair of compliance mechanisms 16 are interposed between the base member 12 and the table support member 14 so as to be capable of moving in the X direction and the Y direction with respect to the base member 12 and the table support member 14. One of the compliance mechanisms 16 is interposed between the first plate 42 and the support plate 28. The other of the compliance mechanisms 16 is interposed between the second plate 48 and the support plate 28. Hereinafter, the one of the compliance mechanisms 16 may be referred to as a "first compliance mechanism 16a," and the other of the compliance mechanisms 16 may be referred to as a "second compliance mechanism 16b."

The first compliance mechanism 16a includes a plurality of balls 58, and a plate shaped retainer 60. The balls 58, for example, are steel balls. The balls 58 are placed in contact with a plane of the first plate 42 that faces in the Z1 direction, and a plane of the support plate 28 that faces in the Z2 direction.

The retainer 60 supports the plurality of balls 58 in a rollable manner. The retainer 60 is formed in a circular annular shape. The outer diameter of the retainer 60 is smaller than the inner diameter of the intermediate member 46. The inner diameter of the retainer 60 is larger than the inner diameter of the first plate 42.

The movement of the first compliance mechanism 16a along the XY plane is restricted by a first stopper 62. The first stopper 62 is mounted by non-illustrated fastening members on the plane of the support plate 28 that faces in the Z2 direction. The first stopper 62 is formed in a circular annular shape. The first stopper 62 is positioned on the inner side of the retainer 60 of the first compliance mechanism 16a.

The second compliance mechanism 16b has the same configuration as the first compliance mechanism 16a. Therefore, a detailed description concerning the configuration of the second compliance mechanism 16b will be omitted. Moreover, the plurality of balls 58 of the second compliance mechanism 16b are placed in contact with a plane of the second plate 48 that faces in the Z2 direction, and a plane of the support plate 28 that faces in the Z1 direction.

The movement of the second compliance mechanism 16b along the XY plane is restricted by a second stopper 64. The second stopper 64 is mounted by non-illustrated fastening members on the plane of the support plate 28 that faces in the Z1 direction. The second stopper 64 is formed in a circular annular shape. The second stopper 64 is positioned on the inner side of the retainer 60 of the second compliance mechanism 16b.

As shown in FIG. 2 to FIG. 5, the table unit 18 includes a first table portion 66 and a second table portion 68. The first table portion 66 is formed in an annular shape. The first table portion 66 extends in the Y direction. The first table portion 66 is disposed between the pair of connecting convex portions 56 of the table support member 14. More specifically, the pair of connecting convex portions 56 are positioned on both sides of the first table portion 66 in the X direction.

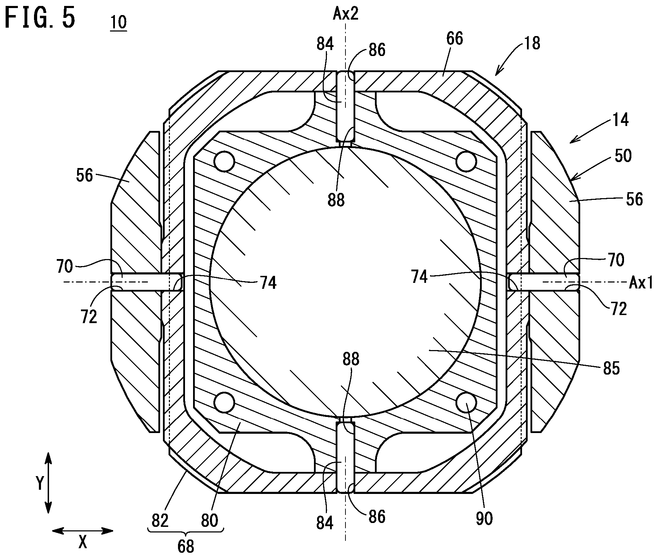

As shown in FIG. 5, the first table portion 66 is supported to be capable of being tilted with respect to the pair of connecting convex portions 56 by a pair of first pins 70. The first pins 70 are inserted so as to straddle over first connection holes 72 of the connecting convex portions 56, and first insertion holes 74 of the first table portion 66.

The first connection holes 72 penetrate through the connecting convex portions 56 in the X direction. The first insertion holes 74 are formed in portions of the first table portion 66 that are adjacent to the first connection holes 72, respectively. The first pins 70 are fixed to the connecting convex portions 56 by first fixing members 78 (refer to FIG. 4). The first pins 70 are not fixed to the first table portion 66. The first table portion 66 is tilted about the first axial line (a first imaginary line) Ax1 of the first pins 70. The first axial line Ax1 extends along the X direction.

The second table portion 68 includes a connecting member 80, a table plate 82, and a receiving plate 85. The connecting member 80 is inserted on the inner side of the first table portion 66. The connecting member 80 is supported to be capable of being tilted with respect to the first table portion 66 by a pair of second pins 84. The second pins 84 are inserted so as to straddle over second insertion holes 86 of the first table portion 66, and second connection holes 88 of the connecting member 80.

The pair of second insertion holes 86 are disposed in portions of the first table portion 66 that face toward each other in the Y direction (refer to FIG. 2). More specifically, the second insertion holes 86 penetrate through the first table portion 66 in the Y direction. The second connection holes 88 are formed in portions of the connecting member 80 that are adjacent to the second insertion holes 86, respectively. The second pins 84 are fixed to the connecting member 80 by second fixing members 89 (refer to FIG. 3). The second pins 84 are not fixed to the first table portion 66. The second table portion 68 is tilted about the second axial line (a second imaginary line) Ax2 of the second pins 84. The second axial line Ax2 extends along the Y direction. The second axial line Ax2 extends in a direction that is perpendicular to the first axial line Ax1.

As shown in FIG. 3 and FIG. 4, the table plate 82 is disposed at an end part of the connecting member 80 in the Z1 direction. The table plate 82 extends outward beyond the connecting member 80. In the table plate 82, there are formed a plurality of mounting holes 90 (refer to FIG. 3) for mounting a non-illustrated chuck member. As shown in FIG. 2 and FIG. 4, the receiving plate 85 is disposed on a surface of the connecting member 80 that faces in the Z2 direction. The receiving plate 85 is positioned in a central part of the second table portion 68.

As shown in FIG. 3 and FIG. 4, the first origin returning mechanism 20 can return the table support member 14 to the origin position, and lock the table support member 14 to the base member 12. The first origin returning mechanism 20 includes three origin returning members 92 (refer to FIG. 3). The three origin returning members 92 are arranged at equal intervals (for example, 120° intervals) in the circumferential direction of the base member 12.

The origin returning members 92 each include a first fluid pressure cylinder 94, a first pressing member 96, and the receiving member 98. The first fluid pressure cylinder 94 is, for example, a pneumatic cylinder that operates using air pressure. The same applies to a second fluid pressure cylinder 112 described later. The configurations of the first fluid pressure cylinder 94 and the second fluid pressure cylinder 112 can be set as appropriate.

The first fluid pressure cylinder 94 is provided for each of the three lateral protrusions 34. As shown in FIG. 4, the first fluid pressure cylinder 94 includes a first cylinder hole 100, a first piston member 102, a first cover member 104, and a first biasing member 106. The first cylinder hole 100 is formed in the lateral protrusion 34 so as to extend in the Z direction. The first cylinder hole 100 opens on a surface of the lateral protrusion 34 that faces in the Z1 direction.

The first piston member 102 slides in the Z direction along the inner surface of the first cylinder hole 100. The first piston member 102 divides the first cylinder hole 100 into a first chamber 108 and a second chamber 110. The first chamber 108 is positioned in the Z2 direction with respect to the first piston member 102. The second chamber 110 is positioned in the Z1 direction with respect to the first piston member 102. The first cover member 104 is mounted on the lateral protrusion 34 so as to close an opening of the first cylinder hole 100 in the Z1 direction.

The first biasing member 106 is interposed between the first piston member 102 and the first cover member 104. The first biasing member 106 biases the first piston member 102 (the first pressing member 96) in the Z2 direction. The first biasing member 106, for example, is a compression coiled spring. The first biasing member 106 may be a rubber member or the like.

The first pressing member 96 protrudes in the Z1 direction from the first piston member 102. The first pressing member 96 penetrates through the first cover member 104. A first pressing surface 96a is provided on an end part of the first pressing member 96 in the protruding direction (the Z1 direction). The first pressing surface 96a is a conical shaped convex surface.

The receiving member 98 is mounted on the first plate 42 so as to face toward the first pressing member 96. The receiving member 98 forms a part of the table support member 14. The receiving member 98 includes a concavely shaped first receiving surface 98a that is capable of being contacted by an end part of the first pressing member 96 in the Z1 direction. The first receiving surface 98a is a conical shaped concave surface.

As shown in FIG. 3 and FIG. 4, the second origin returning mechanism 22 can lock the table unit 18 in a state in which the table unit 18 has been returned to the origin posture from the inclined posture. The second origin returning mechanism 22 is disposed in a central part (the base central part 32 and the central protrusion 36) of the second base portion 26. The second origin returning mechanism 22 includes the second fluid pressure cylinder 112 and a second pressing member 114.

As shown in FIG. 4, the second fluid pressure cylinder 112 includes a second cylinder hole 116, a second piston member 118, the second cover member 120, and a second biasing member 122. The second cylinder hole 116 is formed in the central part of the second base portion 26 so as to extend in the Z direction. The second cylinder hole 116 opens on an end surface of the central protrusion 36 in the protruding direction (the Z1 direction).

The second piston member 118 slides in the Z direction along the inner surface of the second cylinder hole 116. The second piston member 118 divides the second cylinder hole 116 into a first chamber 124 and a second chamber 126. The first chamber 124 is positioned in the Z2 direction with respect to the second piston member 118. The second chamber 126 is positioned in the Z1 direction with respect to the second piston member 118. The second cover member 120 is mounted on the central protrusion 36 so as to close an opening of the second cylinder hole 116 in the Z1 direction.

The second biasing member 122 is interposed between the second piston member 118 and the second cover member 120. The second biasing member 122 biases the second piston member 118 (the second pressing member 114) in the Z2 direction. The second biasing member 122, for example, is a compression coiled spring. The second biasing member 122 may be a rubber member or the like. In an initial state in which a compressed fluid (a fluid for cylinder driving) is not supplied to the first fluid pressure cylinder 94 and the second fluid pressure cylinder 112, the load applied to the second piston member 118 (the second pressing member 114) by the second biasing member 122 is larger than the load applied to the first piston member 102 (the first pressing member 96) by the first biasing member 106.

The second pressing member 114 includes a rod portion 128 and a pressing main body 130. The rod portion 128 protrudes in the Z1 direction from the second piston member 118. The rod portion 128 penetrates through the second cover member 120. The pressing main body 130 is mounted on a protruding end part of the rod portion 128 by a fastening member 131. The fastening member 131, for example, is a screw member. The pressing main body 130 is formed in a flat plate shape. The pressing main body 130 includes a flat second pressing surface 114a that faces in the Z1 direction. The second pressing surface 114a is capable of pressing, in the Z1 direction, a second receiving surface 85a of the receiving plate 85 that faces in the Z2 direction. The second receiving surface 85a is flat.

The base member 12 is provided with a first flow path 132, a second flow path 134, and an orifice 136. The first flow path 132 communicates with the first chamber 108 of each of the first fluid pressure cylinders 94. The first flow path 132 can introduce the fluid into each of the first chambers 108 of the plurality of first fluid pressure cylinders 94. The first flow path 132 is formed in the first base portion 24.

The first flow path 132 communicates with a first port 138 that opens on an outer surface of the first base portion 24. In the present embodiment, one first port 138 is formed in the base member 12. A non-illustrated tube is connected to the first port 138. A compressed fluid (compressed air) can be supplied to the first port 138 from a non-illustrated air supply source. The second chamber 110 of the first fluid pressure cylinder 94 communicates with the exterior space of the base member 12 via a second port 140 formed in the lateral protrusion 34.

The second flow path 134 branches off from an intermediate portion of the first flow path 132. The second flow path 134 communicates with the first chamber 124 of the second fluid pressure cylinder 112. The second chamber 126 of the second fluid pressure cylinder 112 communicates with the exterior space via a third port 142 formed in the central protrusion 36.

The orifice 136 is provided in the second flow path 134. The orifice 136 throttles the flow rate of the fluid flowing through the second flow path 134. The flow path diameter of the orifice 136 is smaller than the flow path diameter of the first flow path 132. In other words, the flow path cross-sectional area of the orifice 136 is smaller than the flow path cross-sectional area of the first flow path 132.

Next, a description will be given concerning operations of the compliance unit 10. As shown in FIG. 4, the compliance unit 10 can be used, for example, in a state in which the Z1 direction is oriented in the direction of gravity. Moreover, the direction in which the compliance unit 10 is disposed can be set as appropriate.

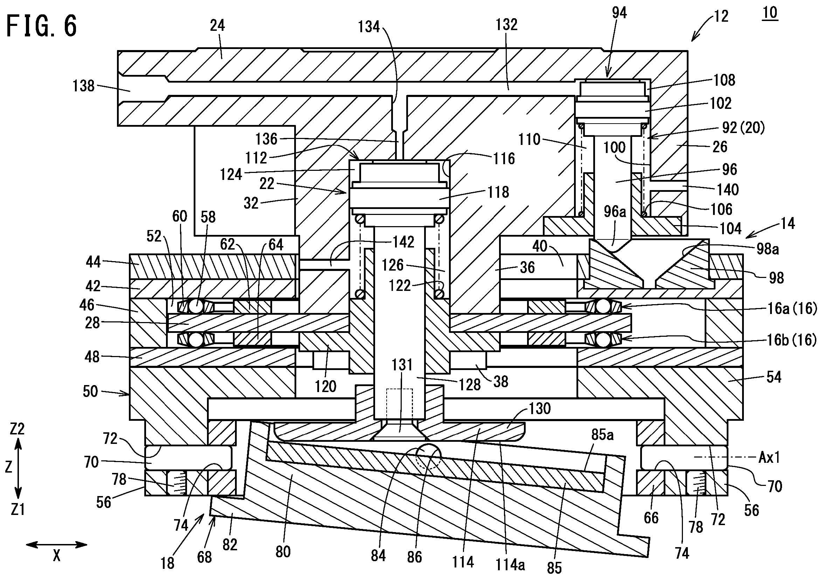

As shown in FIG. 4, in the compliance unit 10, in a state in which the compressed fluid is not supplied to the first port 138, the first piston member 102 of the first fluid pressure cylinder 94 is pushed in the Z2 direction by the first biasing member 106 and is therefore positioned at an end part of the first cylinder hole 100 in the Z2 direction. In this state, the first pressing surface 96a of the first pressing member 96 is positioned at an end part, in the Z2 direction, of the concave surface formed by the first receiving surface 98a of the receiving member 98. In accordance therewith, as shown in FIG. 6, the table support member 14 can be made to move in the X direction and the Y direction (along the XY plane) with respect to the base member 12.

The table unit 18 is provided on the table support member 14. Therefore, the table unit 18 moves along the XY plane together with the table support member 14 with respect to the base member 12.

Further, as shown in FIG. 4, in a state in which the compressed fluid is not supplied to the first port 138, the second piston member 118 of the second fluid pressure cylinder 112 is pushed in the Z2 direction by the second biasing member 122 and is therefore positioned at an end part of the second cylinder hole 116 in the Z2 direction. In this state, the second pressing surface 114a of the second pressing member 114 is positioned away from the second receiving surface 85a in the Z2 direction.

In accordance therewith, as shown in FIG. 6, the first table portion 66 of the table unit 18 can be tilted about the first axial line Ax1 with respect to the table support member 14. Further, the second table portion 68 of the table unit 18 can be tilted about the second axial line Ax2 with respect to the first table portion 66. More specifically, the table unit 18 can be changed from the origin posture to the inclined posture. The origin posture of the table unit 18 refers to a posture of the table unit 18 in which the table plate 82 lies along the XY plane. The inclined posture of the table unit 18 refers to a posture of the table unit 18 in which the table plate 82 is inclined with respect to the XY plane.

In the compliance unit 10, when the compressed fluid is supplied to the first port 138, the compressed fluid flows into the first chamber 108 of the first fluid pressure cylinder 94 via the first flow path 132 and flows into the first chamber 124 of the second fluid pressure cylinder 112 via the second flow path 134 and the orifice 136. In the present embodiment, a relatively large pressure difference can be obtained between the upstream side and the downstream side of the orifice 136. In other words, the pressure of the fluid on the downstream side of the orifice 136 becomes lower than the pressure of the fluid on the upstream side of the orifice 136. Moreover, this pressure difference increases as the flow rate (volumetric flow rate) of the compressed fluid passing through the orifice 136 increases. This makes it possible to delay the operation start timing of the second fluid pressure cylinder 112 from the operation start timing of the first fluid pressure cylinder 94.

Further, in the present embodiment, in the initial state in which the compressed fluid is not supplied to the first fluid pressure cylinder 94 and the second fluid pressure cylinder 112, the load applied to the second pressing member 114 by the second biasing member 122 is larger than the load applied to the first pressing member 96 by the first biasing member 106. Therefore, even in the case that the flow rate of the compressed fluid passing through the orifice 136 is relatively small and the pressure difference between the upstream side and the downstream side of the orifice 136 is relatively small, the operation start timing of the second piston member 118 of the second fluid pressure cylinder 112 can be appropriately delayed from the operation start of the first piston member 102 of the first fluid pressure cylinder 94.

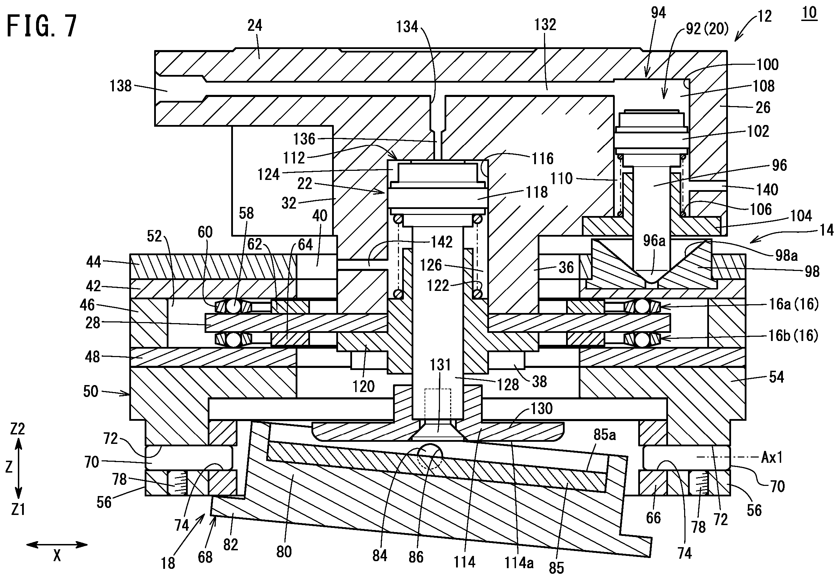

Specifically, first, the compressed fluid supplied to the first chamber 108 of the first fluid pressure cylinder 94 causes the first piston member 102 to move in the first cylinder hole 100 in the Z1 direction while pressing against the first biasing member 106. Then, the first pressing surface 96a of the first pressing member 96 presses the first receiving surface 98a of the receiving member 98 in the Z1 direction, and therefore, as shown in FIG. 7, the table support member 14 returns to the origin position with respect to the base member 12. In accordance therewith, the central part of the second receiving surface 85a is positioned in the Z1 direction of the central part of the second pressing surface 114a. In other words, the central part of the second receiving surface 85a and the central part of the second pressing surface 114a face toward each other.

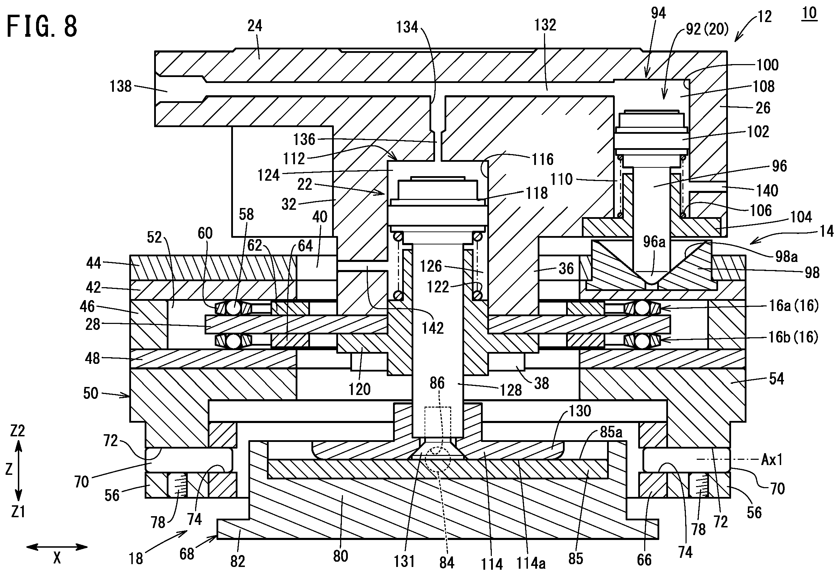

Thereafter, the compressed fluid supplied to the first chamber 124 of the second fluid pressure cylinder 112 causes the second piston member 118 to move in the second cylinder hole 116 in the Z1 direction while pressing against the second biasing member 122. Then, the second pressing surface 114a of the second pressing member 114 presses the second receiving surface 85a of the table unit 18 in the Z1 direction, and therefore, as shown in FIG. 8, the table unit 18 returns to the origin posture from the inclined posture.

According to the present embodiment, in a state in which the table support member 14 has been returned to the origin position with respect to the base member 12 by the first fluid pressure cylinder 94, the second pressing member 114 is pressed against the table unit 18 by the second fluid pressure cylinder 112 to return the table unit 18 to the origin posture from the inclined posture. In accordance therewith, it is possible to prevent a situation in which the table support member 14 becomes incapable of moving with respect to the base member 12 due to the second pressing member 114 being pressed against the table unit 18 in a state in which the table support member 14 shifts from the origin position with respect to the base member 12. Therefore, the table support member 14 can be reliably returned to the origin position with respect to the base member 12. Further, since the first fluid pressure cylinder 94 and the second fluid pressure cylinder 112 are provided in the base member 12, the flow paths for driving the fluid pressure cylinders can be arranged in the base member 12 in a concentrated manner. In other words, the configuration of the compliance unit 10 can be made simple. Furthermore, since it is not necessary to mount, to the table support member 14, a tube for supplying the compressed fluid to the first fluid pressure cylinder 94 and the second fluid pressure cylinder 112, the possibility is eliminated that the tube hinders the movement of the table support member 14 with respect to the base member 12. Therefore, the table support member 14 can be moved smoothly with respect to the base member 12. Thus, it is possible to provide a more satisfactory compliance unit 10.

The present embodiment is not limited to the configuration described above. The compliance unit 10 may not include the orifice 136. In this case, the operation start timing of the second fluid pressure cylinder 112 can be delayed from the operation start timing of the first fluid pressure cylinder 94 by making the load applied to the second pressing member 114 by the second biasing member 122 larger than the load applied to the first pressing member 96 by the first biasing member 106. Further, in the compliance unit 10, the load applied to the second pressing member 114 by the second biasing member 122 may not be larger than the load applied to the first pressing member 96 by the first biasing member 106. In this case, the operation start timing of the second fluid pressure cylinder 112 can be delayed from the operation start timing of the first fluid pressure cylinder 94 by the orifice 136.

In relation to the above-described embodiment, the following supplementary notes are further disclosed.

### (Supplementary Note 1)

The compliance unit (10) of the present disclosure comprises the base member (12), the table support member (14) disposed to be capable of moving with respect to the base member along the XY plane, wherein the direction perpendicular to the X direction is the Y direction, the compliance mechanism (16) interposed between the base member and the table support member so as to be capable of moving in the X direction and the Y direction with respect to the base member and the table support member, and the table unit (18) provided on the table support member to be capable of being tilted about the imaginary line (Ax1, Ax2) extending along the X direction or the Y direction, wherein the base member includes the first fluid pressure cylinder (94) that returns the table support member to the origin position with respect to the base member by pressing the first pressing member (96) toward the table support member, and the second fluid pressure cylinder (112) that returns the table unit from the inclined posture in which the table plate (82) of the table unit is inclined with respect to the XY plane to the origin posture in which the table plate lies along the XY plane, by pressing the second pressing member (114) toward the table unit in a state in which the table support member has been returned to the origin position with respect to the base member by the first fluid pressure cylinder.

In accordance with such a configuration, in a state in which the table support member has been returned to the origin position with respect to the base member by the first fluid pressure cylinder, the second pressing member is pressed against the table unit by the second fluid pressure cylinder to return the table unit to the origin posture from the inclined posture. In accordance therewith, it is possible to prevent a situation in which the table support member becomes incapable of moving with respect to the base member due to the second pressing member being pressed against the table unit in a state in which the table support member shifts from the origin position with respect to the base member. Therefore, the table support member can be reliably returned to the origin position with respect to the base member. Further, since the first fluid pressure cylinder and the second fluid pressure cylinder are provided in the base member, the flow paths for driving the fluid pressure cylinders can be arranged in the base member in a concentrated manner. In other words, the configuration of the compliance unit can be made simple. Furthermore, since it is not necessary to mount, to the table support member, a tube for supplying the compressed fluid to the first fluid pressure cylinder and the second fluid pressure cylinder, the possibility is eliminated that the tube hinders the movement of the table support member with respect to the base member. Therefore, the table support member can be moved smoothly with respect to the base member. Thus, it is possible to provide a more satisfactory compliance unit.

### (Supplementary Note 2)

In the compliance unit according to Supplementary Note 1, the base member may include the first flow path (132) capable of introducing the fluid for cylinder driving into the first fluid pressure cylinder, the second flow path (134) that communicates with the first flow path and is capable of introducing the fluid into the second fluid pressure cylinder, and the orifice (136) positioned in the second flow path.

In accordance with such a configuration, a pressure difference can be obtained between the upstream side and the downstream side of the orifice. This makes it possible to delay the operation start timing of the second fluid pressure cylinder from the operation start timing of the first fluid pressure cylinder by means of a simple configuration. Accordingly, by means of a simple configuration, the table unit can be returned to the origin posture from the inclined posture by pressing the second pressing member against the table unit with the second fluid pressure cylinder in a state in which the table support member has been returned to the origin position with respect to the base member by the first fluid pressure cylinder.

### (Supplementary Note 3)

In the compliance unit according to Supplementary Note 2, the first flow path may communicate with the port (138) that opens on the outer surface of the base member, and the second flow path may branch off from an intermediate portion of the first flow path.

In accordance with such a configuration, the compressed fluid can be supplied to both the first flow path and the second flow path from one port. Consequently, the number of tubes to be connected to the port can be reduced, and therefore it is possible to suppress a situation in which the tubes interfere with other members or become entangled with each other.

### (Supplementary Note 4)

In the compliance unit according to any one of Supplementary Notes 1 to 3, the first fluid pressure cylinder may include the first biasing member (106) that biases the first pressing member in a direction in which the first pressing member is separated away from the table support member, and the second fluid pressure cylinder may include the second biasing member (122) that biases the second pressing member in a direction in which the second pressing member is separated away from the table unit.

In accordance with such a configuration, the configuration of the compliance unit can be further simplified.

### (Supplementary Note 5)

In the compliance unit according to Supplementary Note 4, in the initial state in which the fluid for cylinder driving is not supplied to the first fluid pressure cylinder and the second fluid pressure cylinder, the load applied to the second pressing member by the second biasing member may be larger than the load applied to the first pressing member by the first biasing member.

In accordance with such a configuration, the operation start timing of the second fluid pressure cylinder can be delayed from the operation start timing of the first fluid pressure cylinder by means of a simple configuration.

Although concerning the present disclosure, a detailed description thereof has been presented above, the present disclosure is not necessarily limited to the individual embodiments described above. These embodiments can be subjected to various additions, substitutions, modifications, partial deletions and the like, within a range that does not depart from the essence and gist of the present disclosure, or within a range that does not depart from the essence and gist of the present disclosure as derived from the contents described in the claims and their equivalents. Further, these embodiments can also be implemented in combination. For example, in the above-described embodiments, the order of the operations and the order of the processes are shown merely as examples, and the present disclosure is not necessarily limited to these examples. The same applies also in the case that numerical values or mathematical expressions are used in the description of the aforementioned embodiments.

## Claims

1. A compliance unit (10), comprising:
a base member (12);
a table support member (14) disposed so as to be movable with respect to the base member along an XY plane, wherein a direction perpendicular to an X direction is a Y direction;
a compliance mechanism (16) interposed between the base member and the table support member so as to be movable in the X direction and the Y direction with respect to the base member and the table support member; and
a table unit (18) provided on the table support member so as to be tiltable about an imaginary line (Ax1, Ax2) extending along the X direction or the Y direction,
wherein the base member includes:
a first fluid pressure cylinder (94) configured to return the table support member to an origin position with respect to the base member by pressing a first pressing member (96) toward the table support member; and
a second fluid pressure cylinder (112) configured to return the table unit from an inclined posture in which a table plate (82) of the table unit is inclined with respect to the XY plane to an origin posture in which the table plate lies along the XY plane, by pressing a second pressing member (114) toward the table unit in a state in which the table support member has been returned to the origin position with respect to the base member by the first fluid pressure cylinder.

2. The compliance unit according to claim 1, wherein
the base member includes:
a first flow path (132) configured to introduce a fluid for cylinder driving into the first fluid pressure cylinder;
a second flow path (134) configured to communicate with the first flow path and introduce the fluid into the second fluid pressure cylinder; and
an orifice (136) positioned in the second flow path.

3. The compliance unit according to claim 2, wherein
the first flow path communicates with a port (138) configured to open on an outer surface of the base member, and
the second flow path branches off from an intermediate portion of the first flow path.

4. The compliance unit according to any one of claims 1 to 3, wherein
the first fluid pressure cylinder includes a first biasing member (106) configured to bias the first pressing member in a direction in which the first pressing member is separated away from the table support member, and
the second fluid pressure cylinder includes a second biasing member (122) configured to bias the second pressing member in a direction in which the second pressing member is separated away from the table unit.

5. The compliance unit according to claim 4, wherein
in an initial state in which a fluid for cylinder driving is not supplied to the first fluid pressure cylinder and the second fluid pressure cylinder, a load applied to the second pressing member by the second biasing member is larger than a load applied to the first pressing member by the first biasing member.
